# Europäisches Patentamt

# European Patent Office

# Office européen des brevets

(19)

(11) Veröffentlichungsnummer: **0 098 994**
**B1**

(12)

# EUROPÄISCHE PATENTSCHRIFT

(45) Veröffentlichungstag der Patentschrift: 24.09.86

(51) Int. Cl.⁴: **G 02 B 25/00**

(21) Anmeldenummer: **83105965.4**

(22) Anmeldetag: **18.06.83**

(54) **Augenmuscheln für Brillen-Okulare.**

(30) Priorität: **24.06.82 DE 3223538**

(43) Veröffentlichungstag der Anmeldung:
**25.01.84 Patentblatt 84/4**

(45) Bekanntmachung des Hinweises auf die Patenterteilung:
**24.09.86 Patentblatt 86/39**

(84) Benannte Vertragsstaaten:
**CH DE FR GB IT LI**

(56) Entgegenhaltungen:
**DE-C-488 900**
**DE-U-7 017 992**
**DE-U-7 723 803**

(73) Patentinhaber: **Firma Carl Zeiss, D-7920 Heidenheim (Brenz) (DE)**
(84) Benannte Vertragsstaaten: **CH DE FR IT LI**

(73) Patentinhaber: **CARL- ZEISS- STIFTUNG trading as CARL ZEISS, D-7920 Heidenheim (Brenz) (DE)**
(84) Benannte Vertragsstaaten: **GB**

(72) Erfinder: **Lang, Walter H, Dr. Dipl.- Phys., Finkenweg 33, D-7923 Königsbronn (DE)**
Erfinder: **Hornschu, Joachim, Zeppelinstrasse 47, D-7923 Königsbronn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft eine axial verschiebbare Augenmuschel für Okulare optischer Beobachtungsgeräte mit einem in eine Längsnut der Augenmuschel eingreifenden und mit dem Okulargehäuse verbundenen Führungsteil.

Es sind starre Augenmuscheln bekannt, die am Okulargehäuse axial verschiebbar sind und in den Stellungen zur Benutzung mit Brille und ohne Brille fixierbar sind. Derartige Augenmuscheln sind beispielsweise in der DE-U-7 723 803 beschrieben.

In der DE-A-488 900 sind Augenmuscheln beschrieben, die auf einem Rohrstück axial verschiebbar und durch einen Bajonettverschluß in verschiedenen Stellungen auf der Okularfassung feststellbar sind. Die Feststellbarkeit in beliebig vielen Stellungen durch einen Bajonettverschluß ist technisch aufwendig und fordert vom Benutzer Aufmerksamkeit und Geschick.

Für hochwertige optische Geräte werden sogenannte Brillen-Okulare verwendet, die es Brillenträgern ermöglichen, ihre Augenpupille in die Austrittspupille des Okulars zu bringen und dadurch das ganze Sehfeld zu übersehen. Diese Brillen-Okulare sind so berechnet, daß ihre Austrittspupille 20-24 mm über dem Okular liegen. Bei normalen Okularen liegt die Austrittspupille 10-12 mm über dem Okular. Um Brillen-Okulare sowohl für Normalsichtige als auch für Brillenträger geeignet zu machen, wurden umstülpbare Augenmuscheln entwickelt. Für Beobachtungen ohne Brille werden die Augenmuscheln auf ihre ganze Länge von ca. 12 mm hochgeklappt, so daß die Austrittspupille an einen günstigen Ort zu den Augen gebracht wird. Brillenträger stülpen die Augenmuscheln nach unten um und haben damit bei der weit abliegenden Austrittspupille den vollen Überblick über das gesamte Bildfeld. Benutzer, deren Augenaustrittspupille von dem für die Berechnung der Okulare vereinbarten mittleren Wert abweicht, können bei vorgegebener Länge der Augenmuscheln keinen optimalen Beobachtungszustand erreichen. Bei kurzen Beobachtungen, beispielsweise durch ein Fernglas, kann sich das Auge durch Akkomodation einigermaßen auf diesen Zustand einstellen. Bei langen, hohe Konzentration erfordernden Arbeiten jedoch, wie sie beispielsweise bei mikrochirurgischen Eingriffen mittels Operationsmikroskop erforderlich sind, wirkt sich ein ständiger Akkomodationszwang des Auges ermüdend auf den Beobachter aus.

Aus der GB-A-112 989 sind kontinuierlich achsial verstellbare Augenmuscheln bekannt, die eine Koinzidenzeinstellung van Austrittspupille des Okulars und Eintrittspupille des Beobachterauges ermöglichen sollen. Diese bekannten verstellbaren Augenmuscheln bestehen aus einem doppelwandigen elastischen Material, daß mit Flüssigkeit oder Luft zu verschiedener Höhe aufpumpbar ist. Die Augenmuscheln sollen für Okulare unterschiedlicher Vergrößerung, deren Austrittspupillen in verschiedenem Abstand über dem Okular liegen, verwendbar sein. Ihr Nachteil besteht darin, daß sie aufwendig in der Konstruktian und störanfällig bei der Benutzung sind.

Aus der GB-A- 313 126 sind starre Augenmuscheln für binakulare Fernrohre bekannt, die gemeinsam über einen am Mitteltrieb befestigten Steg kontinuierlich achsial verstellbar sind. Für heutige Begriffe ist diese Verschiebemechanik zu aufwendig und zu sperrig in der Ausführung.

Der Erfindung liegt die Aufgabe zugrunde, kontinuierlich achsial verstellbare Augenmuscheln zur Pupillen-Koinzidenzeinstellung anzugeben. Sie sollen einen Ausgleich für unterschiedlich tiefliegende Augen der Benutzer ermöglichen und für Okulare mit Dioptrienausgleich und/oder unterschiedlicher Vergrößerung durch Pupillen-Koinzidenzeinstellung eine optimale Benutzung gewährleisten.

Diese Aufgabe wird erfindungsgemöß dadurch gelöst, daß zur Koinzidenzeinstellung der Austrittspupille des Okulars mit der Eintrittspupille des Beobachterauges eine starre Augenmuschel in Gleitpassung axial verschiebbar mit dem Okulargehäuse verbunden ist, wobei ein zwischen der Außenfläche des Okulargehäuses und der Innenfläche der Augenmuschel wirkendes Reibungselement zur Fixierung der Lage der Augenmuschel dient.

Das Reibungselement zur Momenteinstellung kann aus einem in die Okularfassung eingelassenen Sprengring bestehen, oder der untere Rand der Augenmuschel kann so gestaltet sein, daß er bei einer Achsialverschiebung einen Reibkontakt mit dem Okulargehäuse bildet.

Die mit der Erfindung erzielten Vorteile bestehen insbesondere darin, daß sie durch den möglichen Ausgleich van Fehlsichtigkeit des Benutzers und von anatomischen Besonderheiten des Auges ein ermüdungsfreies Arbeiten über lange Zeiten erlaubt.

Ein Ausführungsbeispiel der Erfindung ist in der Zeichnung dargestellt und wird im folgenden näher beschrieben. Es zeigen:

Fig. 1 einen Längsschnitt durch eine erfindungsgemäße Augenmuschel zur Beobachtung ohne Brille mit maximal eingestellter Länge;

Fig. 2 die in Fig. 1 gezeigte Augenmuschel in der Stellung für die Boabachtung durch einen Brillenträger;

Fig. 3 eine Variation der in den Fig. 1 und 2 gezeigten Augenmuschel in einer mittleren eingestellten Länge.

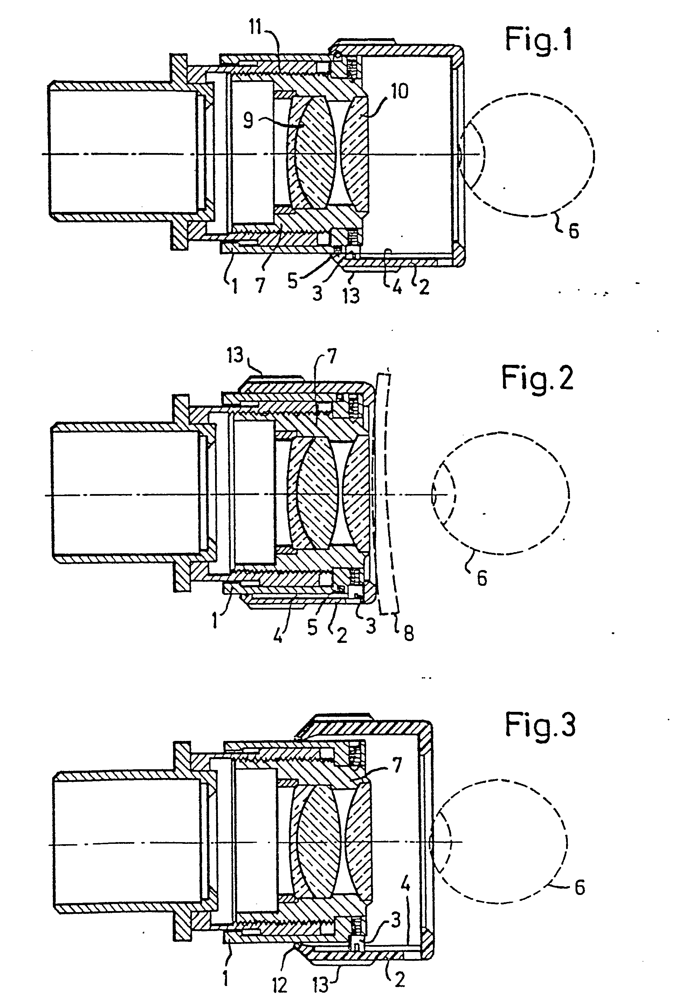

Mit 1 ist die äußere Hülse eines Mikroskopokulares bezeichnet, dessen abbildende Linsen 9 und 10 zum Dioptrienausgleich des Benutzers über das Gewinde 11 in an sich bekannter Weise durch eine Drehbewegung der Augenmuschel 2 achsial verstellbar sind. Die Augenmuschel 2 ist mit einer Längsnut 4 versehen, in die das in der Okularhülse 1 befestigte Führungsteil 3 eingreift. Der Sprengring 5 erlaubt eine Momenteinstellung bei der Achsialverschiebung der Augenmuschel 2 und rastet in der in Fig. 1 gezeigten Endstellung in eine entsprechende Vertiefung der Augenmuschel ein. In der in Fig. 1 gezeigten Darstellung ist der achsiale Verstellbereich der Augenmuschel voll ausgenützt. Das unbewaffnete Auge 6 des Beobachters befindet sich in der maximal einstellbaren Entfernung von der letzten Linse 10 des Okulars. Der Dioptrienausgleich wird durch Drehen am Rändel 13 eingeleitet.

In der Darstellung der Fig. 2 ist die Augenmuschel 2 ganz zurückgeschoben. Hinter dem Brillenglas 8 befindet sich das Beobachterauge 6 am Ort der Austrittspupille des Okulars.

In der Darstellung der Fig. 3 ist die Augenmuschel 2 für eine mittlere Pupillenlage für einen Beobachter ohne Brille eingestellt. In der Ausführungsform unterscheidet sich die in Fig. 3 gezeigte Augenmuschel vom Ausführungsbeispiel der Fig. 1 und 2 dadurch, daß anstelle des Sprengringes 5 die Augenmuschel 2 an ihrem unteren Ende 12 so gestaltet ist, daß sie bei der kontinuierlichen Achsialverstellung eine Reibungskraft ausübt. Der Verstellbereich der Augenmuschel wird durch die Längsnut 4 begrenzt.

## Patentansprüche

1. Axial verschiebbare Augenmuschel für Okulare optischer Beobachtungsgeräte mit einem in eine Längsnut der Augenmuschel eingreifenden und mit dem Okulargehäuse verbundenen Führungsteil, dadurch gekennzeichnet, daß zur Koinzidenzeinstellung der Austrittspupille des Okulars mit der Eintrittspupille des Beobachterauges eine starre Augenmuschel (2) in Gleitpassung axial verschiebbar mit dem Okulargehäuse (1) verbunden ist, wobei ein zwischen der Außenfläche des Okulargehäuses (1) und der Innenfläche der Augenmuschel (2) wirkendes Reibungselement (5, 12) zur Fixierung der Lage der Augenmuschel dient.

2. Augenmuscheln nach Anspruch 1, dadurch gekennzeichnet, daß das Reibungselement als ein in das Okulargehäuse (1) eingelassener Sprengring (5) ausgeführt ist.

3. Augenmuschel nach Anspruch 1, dadurch gekennzeichnet, daß das Reibungselement als kugelige Verdickung (12) am unteren, am Okulargehäuse (1) anliegenden Ende der Augenmuschel (2) ausgeführt ist.

## Claims

1. Axially adjustable eyecups for eyepieces of optical viewing instruments with a longitudinal slot for keyed reception of a guide part, characterized by the fact, that for the adjustment of pupil coincidence of the exit pupil of the ocular with the pupil of the eye of the user a rigid tubular eyecups (2) is adapted for sliding engagement in axial direction to the housing (1) of the eyepiece whereby a friction element (5, 12) is provided between the eyepiece housing (1) and the eyecup (2) for retaining a selected position of the eyecup.

2. Eyecups according to claim 1, characterized by the fact that the friction element is developed as a snap ring (5) which is recessed in the eyepiece housing (1).

3. Eyecups according to claim 1, characterized by the fact, that the friction element is developed as a spherical thickening (12) at the lower edge of the eyecup (2) which engages to the ocular housing (1).

## Revendications

1. Bonnette axialement déplaçable pour oculaires d'appareils d'observation optiques, comprenant une pièce de guidage qui pénètre dans une rainure longitudinale de la bonnette et est reliée à la monture de l'oculaire, caractérisée en ce que, pour le réglage de coïncidence de la pupille de sortie de l'oculaire avec la pupille d'entrée de l'oeil de l'observateur, une bonnette rigide (2) est reliée à la monture (1) de l'oculaire de façon à pouvoir être déplacée axialement à ajustement glissant, un élément de friction (5, 12), agissant entre la surface externe de la monture (1) de l'oculaire et la surface interne de la bonnette (2), servant à bloquer la position de la bonnette.

2. Bonnette selon la revendication 1, caractérisée en ce que l'élément de friction est un jonc (5) encastré dans la monture (1) de l'oculaire.

3. Bonnette selon la revendication 1, caractérisée en ce que l'élément de friction est un épaississement sphérique (12) sur l'extrémité inférieure de la bonnette (2), extrémite qui est appliquée contre la monture (1) de l'oculaire.

Fig.1

Fig.2

Fig.3